# EUROPEAN PATENT APPLICATION

(11) **EP 4 135 136 A1**
(43) Date of publication of application: **15.02.2023**
(21) Application number: 21190684.7
(22) Date of filing: 10.08.2021
(51) Int. Cl.: H02B 13/035

(54) **HIGH VOLTAGE GAS INSULATED SWITCHGEAR (HV GIS) FOR SINGLE OR THREE PHASE OPERATION**

(71) Applicant: Hitachi Energy Switzerland AG, 5400 Baden (CH)
(72) Inventor: Peters, Hauke, 63457 Hanau (DE)
(74) Representative: Michalski Hüttermann & Partner Patentanwälte mbB

(57) **Abstract**

The invention relates to a high voltage gas insulated switchgear, HV GIS, for single or three phase operation, comprising
a plurality of disconnector modules (1) associated to each phase, whereby the disconnector modules (1) are filled with an insulating gas and are interconnected with a main bus bar (2) associated to each phase and extending through all disconnector modules (1) thereby forming a main housing (3) for the respective phase with the insulating gas surrounding the main bus bar (2), and
a plurality of auxiliary modules (7) associated to each phase, whereby the auxiliary modules (7) are filled with the insulating gas and are interconnected with an auxiliary bus bar (8) associated to each phase and extending through all auxiliary modules (7) thereby forming an auxiliary housing (6) for the respective phase with the insulating gas surrounding the auxiliary bus bar (8).

## Description

### Technical Field

The invention relates to a high voltage gas insulated switchgear, HV GIS, for single or three phase operation, comprising a plurality of disconnector modules associated to each phase, whereby the disconnector modules are filled with an insulating gas and are interconnected with a main bus bar associated to each phase and extending through all disconnector modules thereby forming a main housing for the respective phase with the insulating gas surrounding the main bus bar.

### Background Art

### Summary of invention

It is therefore an object of the invention to provide a possibility for increasing current carrying capability of a high voltage gas insulated switchgear, HV GIS, for single or three phase operation, for in case when an accumulation of feeder currents exceeds a rated current of a busbar of the HV GIS, without an existing HV GIS.

The object of the invention is solved by the features of the independent claims. Preferred implementations are detailed in the dependent claims.

Thus, the object is solved by a high voltage gas insulated switchgear, HV GIS, for single or three phase operation, comprising
a plurality of disconnector modules associated to each phase, whereby the disconnector modules are filled with an insulating gas and are interconnected with a main bus bar associated to each phase and extending through all disconnector modules thereby forming a main housing for the respective phase with the insulating gas surrounding the main bus bar, and
a plurality of auxiliary modules associated to each phase, whereby the auxiliary modules are filled with the insulating gas and are interconnected with an auxiliary bus bar associated to each phase and extending through all auxiliary modules thereby forming an auxiliary housing for the respective phase with the insulating gas surrounding the auxiliary bus bar.

It is therefore a key point of the invention that an auxiliary housing comprising the plurality of auxiliary modules interconnected by the auxiliary bus bar is basically 'added' to the main housing.

According to preferred implementation each disconnector module comprises a disconnector configured for connecting a feeder connection to the main bus bar,

According to preferred implementation at least two of the disconnector modules and auxiliary modules of the respective phase comprise a coupling connection connecting the main bus bar and the auxiliary bus bar between the respective disconnector module and the respective auxiliary module.

According to preferred implementation the auxiliary housing is detachably attachable to the main housing and/or the auxiliary housing is provided separate to the main housing.

According to preferred implementation the HV GIS comprises a plurality of auxiliary housings attached to the main housing with the respective auxiliary modules connected in series and/or in parallel to the respective disconnector module.

According to preferred implementation each of the plurality auxiliary housings comprises an increased number of auxiliary modules, whereby an increased number of respective auxiliary modules are connected in series and/or in parallel to the respective disconnector module.

According to preferred implementation the auxiliary modules are connected to the disconnector modules opposite side to the feeder connection.

According to preferred implementation the auxiliary modules and the disconnector modules are interconnected with the insulating gas surrounding the coupling connections.

According to preferred implementation all disconnector modules and auxiliary modules are connected by the respective coupling connection or whereby the disconnector modules and auxiliary modules are connected in regular intervals by the respective coupling connection.

According to preferred implementation the main bus bar and the auxiliary bus bar extend parallel to each other and/or the coupling connection extends perpendicular to the main bus bar and/or the auxiliary bus bar.

According to preferred implementation the disconnector module comprises a circuit breaker and/or an earthing switch connected to the main bus bar.

According to preferred implementation the main bus bar is configured for a rating of at least 3000 A, in particular at least 3150 A, and/or the auxiliary bus bar is configured for a rating of at least 2500 A.

According to preferred implementation the main housing comprises at least one additional module associated to each phase, the additional module is arranged between two disconnector modules, is filled with the insulating gas and interconnected with the main bus bar extending through the additional module, and the additional module is connected with one of the auxiliary modules by coupling connection.

According to preferred implementation the insulating gas comprises at least one of SF6, Airplus C5K, C4FN, CO2-O2 and pressurized air and/or any mixture thereof.

The objective is further solved by a method for operating a high voltage gas insulated switchgear, HV GIS, for single or three phase operation, comprising the steps of:
Providing a plurality of disconnector modules associated to each phase, whereby the disconnector modules are filled with an insulating gas and are interconnected with a main bus bar associated to each phase and extending through all disconnector modules thereby forming a main housing for the respective phase with the insulating gas surrounding the main bus bar, and
Providing a plurality of auxiliary modules associated to each phase, whereby the auxiliary modules are filled with the insulating gas and are interconnected with an auxiliary bus bar associated to each phase and extending through all auxiliary modules thereby forming an auxiliary housing for the respective phase with the insulating gas surrounding the auxiliary bus bar.

According to preferred implementation the method comprises the step of:
Connecting the main bus bar and the auxiliary bus bar between the respective disconnector module and the respective auxiliary module of the respective phase with a coupling connection.

Further implementations and advantages of the method are directly and unambiguously derived by the person skilled in the art from the switchgear as described before.

### Brief description of drawings

These and other aspects of the invention will be apparent from and elucidated with reference to the implementations described hereinafter.

In the drawings:

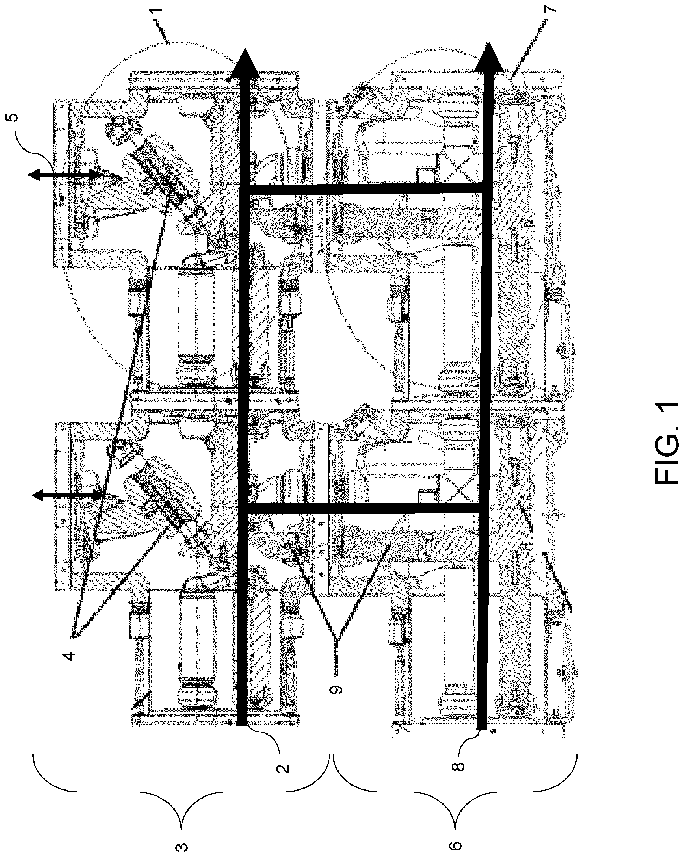

- Fig. 1: shows an example implementation.

### Description of implementations

Fig. 1 shows a high voltage gas insulated switchgear, HV GIS, for single or three phase operation according to a preferred implementation.

The HV GIS comprises a plurality of disconnector modules 1 associated to each phase, whereas Fig. 1 shows only one phase and only two disconnector modules 1 arranged besides each other. The disconnector modules 1 are filled with an insulating gas and are interconnected with a main bus bar 2 associated to each phase, indicated by bold arrow. The main bus bar 2 extends through and such wise connected all disconnector modules 1, which thereby form a main housing 3. Each disconnector module 1 further comprises a disconnector 4, which is configured for connecting a feeder connection 5 to the main bus bar 2, indicated by arrow. Such feeder connection 5 may for example connect a wind turbine to the HV GIS.

Separate from the main housing 3 an auxiliary housing 6 is provided, which is detachably attached the main housing 3. The auxiliary housing 6 comprises a plurality of auxiliary modules 7 associated to each phase, whereas Fig. 1 shows only one phase and only two auxiliary modules 7 arranged besides each other. The auxiliary modules 7 are also filled with the insulating gas and are interconnected with an auxiliary bus bar 8 associated to each phase. The auxiliary bus bar 8 extends through all auxiliary modules 7 thereby forming the auxiliary housing 6 for the respective phase with the insulating gas surrounding the auxiliary bus bar 8.

Each one respective main housing 3 and auxiliary housing 6 are connected together with a respective coupling connection 9, indicated by vertical bold arrow, connecting the main bus bar 2 and the auxiliary bus 8. While Fig. 1 only shows one auxiliary housing 6, a plurality of auxiliary housings 6 can be provided attached to the main housing 3 with the respective auxiliary modules 7 connected in series and/or in parallel to the respective disconnector module 1.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: disconnector module
- 2: main bus bar
- 3: main housing
- 4: disconnector
- 5: feeder connection
- 6: auxiliary housing
- 7: auxiliary module
- 8: auxiliary bus bar
- 9: coupling connection

## Claims

1. High voltage gas insulated switchgear, HV GIS, for single or three phase operation, comprising
a plurality of disconnector modules (1) associated to each phase, whereby the disconnector modules (1) are filled with an insulating gas and are interconnected with a main bus bar (2) associated to each phase and extending through all disconnector modules (1) thereby forming a main housing (3) for the respective phase with the insulating gas surrounding the main bus bar (2), and
a plurality of auxiliary modules (7) associated to each phase, whereby the auxiliary modules (7) are filled with the insulating gas and are interconnected with an auxiliary bus bar (8) associated to each phase and extending through all auxiliary modules (7) thereby forming an auxiliary housing (6) for the respective phase with the insulating gas surrounding the auxiliary bus bar (8).

2. HV GIS according to the previous claim, comprising at least two of the disconnector modules (1) and auxiliary modules (7) of the respective phase comprise a coupling connection (9) connecting the main bus bar (2) and the auxiliary bus bar (8) between the respective disconnector module (1) and the respective auxiliary module (7).

3. HV GIS according to any of the previous claims, whereby each disconnector module (1) comprises a disconnector (4) configured for connecting a feeder connection (5) to the main bus bar (2),

4. HV GIS according to any of the previous claims, whereby the auxiliary housing (6) is detachably attachable to the main housing (3) and/or the auxiliary housing (6) is provided separate to the main housing (3).

5. HV GIS according to any of the previous claims, comprising a plurality of auxiliary housings (6) attached to the main housing (3) with the respective auxiliary modules (7) connected in series and/or in parallel to the respective disconnector module (1).

6. HV GIS according to the previous claim, whereby each of the plurality auxiliary housings (6) comprises an increased number of auxiliary modules (7), whereby an increased number of respective auxiliary modules (7) are connected in series and/or in parallel to the respective disconnector module (1).

7. HV GIS according to any of the previous claims, whereby the auxiliary modules (7) are connected to the disconnector modules (1) opposite side to the feeder connection (5).

8. HV GIS according to any of the previous claims 2 to 7, whereby the auxiliary modules (7) and the disconnector modules (1) are interconnected with the insulating gas surrounding the coupling connections (9).

9. HV GIS according to any of the previous claims 2 to 8, whereby all disconnector modules (1) and auxiliary modules (7) are connected by the respective coupling connection (9) or whereby the disconnector modules (1) and auxiliary modules (7) are connected in regular intervals by the respective coupling connection (9).

10. HV GIS according to any of the previous claims 2 to 9, whereby the main bus bar (2) and the auxiliary bus bar (8) extend parallel to each other and/or the coupling connection (9) extends perpendicular to the main bus bar (2) and/or the auxiliary bus bar (8).

11. HV GIS according to any of the previous claims, whereby the disconnector module (1) comprises a circuit breaker and/or an earthing switch connected to the main bus bar (2).

12. HV GIS according to any of the previous claims, whereby the main bus bar (2) is configured for a rating of at least 3000 A and/or the auxiliary bus bar (8) is configured for a rating of at least 2500 A.

13. HV GIS according to any of the previous claims, whereby the insulating gas comprises at least one of SF6, Airplus C5K, C4FN, CO2-O2 and pressurized air and/or any mixture thereof.

14. Method for operating a high voltage gas insulated switchgear, HV GIS, for single or three phase operation, comprising the steps of:
Providing a plurality of disconnector modules (1) associated to each phase, whereby the disconnector modules (1) are filled with an insulating gas and are interconnected with a main bus bar (2) associated to each phase and extending through all disconnector modules (1) thereby forming a main housing (3) for the respective phase with the insulating gas surrounding the main bus bar (2), and
Providing a plurality of auxiliary modules (7) associated to each phase, whereby the auxiliary modules (7) are filled with the insulating gas and are interconnected with an auxiliary bus bar (8) associated to each phase and extending through all auxiliary modules (7) thereby forming an auxiliary housing (6) for the respective phase with the insulating gas surrounding the auxiliary bus bar (8).
